# EUROPEAN PATENT SPECIFICATION

(11) **EP 2 090 030 B1**
(45) Date of publication and mention of the grant of the patent: **07.11.2012**
(21) Application number: 07827087.3
(22) Date of filing: 30.11.2007
(51) Int. Cl.: H04L 12/28, H04L 12/24

(54) **System and method for managing network connectivity disruptions in a multi-homed UPNP device**
System und Verfahren zur Verwaltung von unterbrechungen der Netzwerkkonnektivität in einem Mehrnetze-UPNP-Gerät
Système et procédé de gestion d'interruption de connexion de réseau dans un dispositif UPNP à plusieurs connexions

(30) Priority: 13.12.2006 US 610473
(43) Date of publication of application: 19.08.2009
(73) Proprietor: Nokia Corporation, 02150 Espoo (FI)
(72) Inventor: CHAN, Cathy, Burlington, MA 01803 (US)
(74) Representative: Derry, Paul Stefan
(86) International application number: PCT/IB2007/054857
(87) International publication number: WO 2008/072129

(56) References cited:
- US-A1- 2004 111 494
- BODLAENDER M.P.: 'UPnP 1.1 - Designing for Performance & Compatibility', [Online] 20 December 2004, XP003022762 Retrieved from the Internet: <URL:http://www.ieeexplore.ieee.org/iel5/30 /30482/01405701.pdf>
- 'UPnP Device Architecture 1.0', [Online] 06 May 2003, XP003022763 Retrieved from the Internet: <URL:http://www.xml.coverpages.org/UPnP-DA1 01-20030506.doc>

## Description

### FIELD OF THE INVENTION

The present invention relates generally to Universal Plug and Play (UPnP) technology. More particularly, the present invention relates to the use of the maintaining of availability of a multi-homed device in a UPnP environment when fewer than all of the device's network interfaces experience a connectivity disruption.

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

UPnP technology defines an architecture for pervasive peer-to-peer network connectivity of intelligent appliances, wireless devices, and personal computer devices of all types. UPnP is designed to bring easy-to-use, flexible, standards-based connectivity to ad-hoc or unmanaged networks whether in the home, in a small business, public spaces, or attached to the Internet. UPnP technology provides a distributed, open networking architecture that leverages Transmission Control Protocol/Internet Protocol (TCP/IP) and Web technologies in order to enable seamless proximity networking, in addition to control and data transfer among networked devices.

The UPnP Device Architecture (UDA) is designed to support zero-configuration, "invisible" networking and automatic discovery for a breadth of device categories from a wide range of vendors. In other words, UPnP enables a device to be capable of dynamically joining a network, obtaining an IP address, conveying the device's capabilities, and learning about the presence and capabilities of other devices.

The UPnP Device Architecture standard (version 1.1) defines a BOOTID.UPNP.ORG header, referred to as BOOTID herein, in Simple Service Discovery Protocol (SSDP) messages. The BOOTID is a monotonically increasing value. When a device starts or performs a "reboot," it must increase the value of the BOOTID. So long as a device remains available in the network, the same BOOTID value must be used in all repeat announcements, search responses and ultimately bye-bye messages. A device must use the same BOOTID value in all SSDP messages it sends on multiple network interfaces or IP addresses. In UPnP terminology, a "reboot" is defined as the announcing of device unavailability by sending SSDP:byebye messages, and subsequently re-announcing device availability by sending fresh SSDP:alive messages.

The BOOTID header is particularly useful in situations where a device detects a disruption in network connectivity, i.e. where the device has temporarily lost network connectivity but has regained connectivity (for example, a network cable was unplugged and re-plugged), or its IP address has changed. In such cases, the device increases its BOOTID value and reannounces itself on the network. Upon receiving an SSDP message with an increased BOOTID value, a control point that has cached information about the device understands that the device is no longer the same device. The control point typically reacts to this activity by refreshing the device information and potentially resubscribing to the device's services.

Despite the above, issues currently exist concerning the usage of the BOOTID in a multi-homed environment. A multi-homed device may have multiple network interfaces, multiple IP addresses on the same network interface, or both. Assuming a device has multiple network interfaces, for example, the device may be connected to one or multiple disjoint network segments through its network interfaces. A network connectivity disruption may occur on a network interface if the device briefly loses connectivity on the network interface, e.g., if the network cable is unplugged and then re-plugged, or if the IP address on the network interface changes. In this case, an issue arises as to whether and how the device updates the BOOTID value after such network connectivity disruptions.

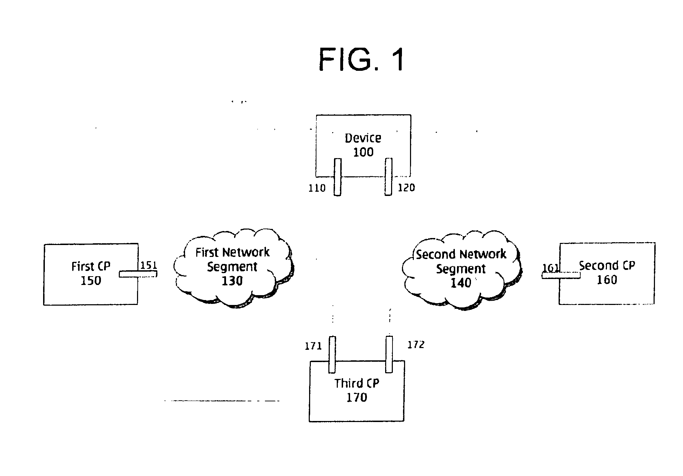

In examining the above issue, it is helpful to consider a system as depicted in Figure 1. As shown in Figure 1, a device 100 has a first interface 110 and a second interface 120 which are connected to a first network segment 130 and a second network segment 140, respectively. A first control point 150 has a first control point interface 151 which is connected to the first network segment 130, and a second control point 160 has a second control point interface 161 which is connected to the second network segment 140. A third control point 170 is a multi-homed control point and is connected to both the first and second network segments 130 and 140 through third control point interfaces 171 and 172. Each of the first, second and third control points 150, 160 and 170 has cached some information about the device 100 and is subscribed to its services. In this situation, it is helpful to consider a situation where there is a brief network connectivity disruption on the first network interface 110 of the device 100 (and therefore on first network segment 130). From the perspective of first network segment 130 (and the first and third control points 150 and 170 connected to the first network segment 130), the device 100 has lost connectivity and needs to be "rebooted". In other words, from the perspective of the first network segment 130, the device 100 should increase its BOOTID and re-advertise itself on the first network segment 130. On the other hand, from the perspective of second network segment 140 (and the second and third control points 160 and 170 which are connected to the second network segment 140), the device 100 has remained available throughout and a "reboot" is neither necessary nor expected. In other words, from the perspective of the second network segment 140, the device 100 should continue using its existing BOOTID in its subsequent announcements on the second network segment 140. However, because the device 100 is connected to both the first and second network segments 130 and 140, and because it must use the same BOOTID on both of them, a substantial problem exists.

Given that the control points connected on the first network segment 130 must be made aware that the device 100 has temporarily lost connectivity, the device 100 has no choice but to increase its BOOTID and re-advertise itself. However, this approach suffers from a side-effect that control points that are connected to the second network segment 140, and are not affected by the disruption, are also forced to refresh their device information. This has multiple repercussions. First, network traffic increases, as all control points need to refresh their device information. Second, the processing load on both the device 100 and the associated control points also increases. Third, this approach results in a less-than-friendly user experience. For example, if a user is using a UPnP-enabled computer that is connected to the Ethernet, and if there is a UPnP device connected to the home network via both the Ethernet and a wireless LAN (WLAN), if the WLAN connectivity is unstable, then the user would observe that the UPnP device repeatedly appears and disappears on the Ethernet, even though both the user and the UPnP device have been consistently connected on the Ethernet throughout the entire period. Fourth, the rebooting of the device also causes disruptions to the services that the control points may currently be consuming. For example, a file upload may need to be aborted, or a video playback may be interrupted if a reboot is necessary.

It would therefore be desirable to provide an improved system for managing connectivity disruptions in a multi-homed UPnP device in order to address the issues discussed above.

### SUMMARY OF THE INVENTION

The invention is defined by the subject-matter of independent claims 1, 4, 5, 10, 11, 14 and 15. Various embodiments of the present invention serve to minimize interactions between a multi-homed device and associated control points in the event that the multi-homed device experiences connectivity disruptions in some, but not all, of its network interfaces. In various embodiments, this is achieved by introducing a new optional header to the SSDP:byebye message format. The new header allows a multi-homed device to signal its continuous availability to compatible control points, despite the need to send SSDP:byebye messages, update its BOOTID value and re-advertise itself to address a network issue it experienced elsewhere. The use of this new header indicates to control points that they can continue to utilize the device and its associated services regardless of these SSDP messages.

The various embodiments of the present invention provide a number of benefits to users. The arrangements described herein can be backward compatible with UPnP. v1.0 control points. Minimal processing is required on control points that are connected to the network interfaces that did not experience connectivity disruptions. Additionally, only a minimal amount of processing is required on the UPnP device because a minimal number of control points are impacted by the connectivity disruption. Still further, the various embodiments serve to greatly reduce the number of service disruptions to associated control points. Also, processing of the new optional header is optional; a control point that chooses to ignore the header can do so at the expense of having to re-establish device information, such as cached device states and event subscriptions. The various embodiments of the present invention can be incorporated into virtually any product that implements UPnP v1.1 Device Architecture.

These and other advantages and features of the invention, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

Figure 1 is a depiction of a UPnP environment where a device includes multiple interfaces for use in associating with multiple network connections and control points;

Figure 2 is a flow chart showing the implementation of one general embodiment of the present invention;

Figure 3 is perspective view of an electronic device that can be used in the implementation of the present invention; and

Figure 4 is a schematic representation of the circuitry of the mobile telephone of Figure 3.

### DETAILED DESCRIPTION OF VARIOUS EMBODIMENTS

The present invention serves to minimize the interactions between a multi-homed device and any associated control points in the event that the multi-homed device experiences connectivity disruptions in some, but not all, of its network interfaces. In various embodiments, this is achieved by introducing a new optional header NEXTBOOTID.UPNP.ORG (referred to herein as NEXTBOOTID) to the SSDP:byebye message format. The NEXTBOOTID header allows a multi-homed device to signal its continuous availability to compatible control points, despite the need to send SSDP:byebye messages, update its BOOTID value and re-advertise itself to address a network issue it experienced elsewhere. The use of the NEXTBOOTID header indicates to control points that they can continue to utilize the device and its associated services regardless of these SSDP messages.

The NEXTBOOTID.UPNP.ORG header can be included in SSDP:byebye messages sent by a multi-homed device, if the device experiences a disruption in the network connectivity on one of its network interfaces. The header is only included in messages sent over the network interfaces on which connectivity was not interrupted. On the network intcrfacc(s) where connectivity was disrupted, the header is not used. The value of the NEXTBOOTID.UPNP.ORG header indicates the BOOTID value that will be used in the upcoming SSDP announcement message. The device must remain continuously available on the network between the sending of the SSDP:byebye message with the NEXTBOOTID value and the next set of advertisement messages with the updated BOOTID value. Should the device become unavailable during this time, it must perform a regular "reboot," incrementing the BOOTID and re-advertising itself.

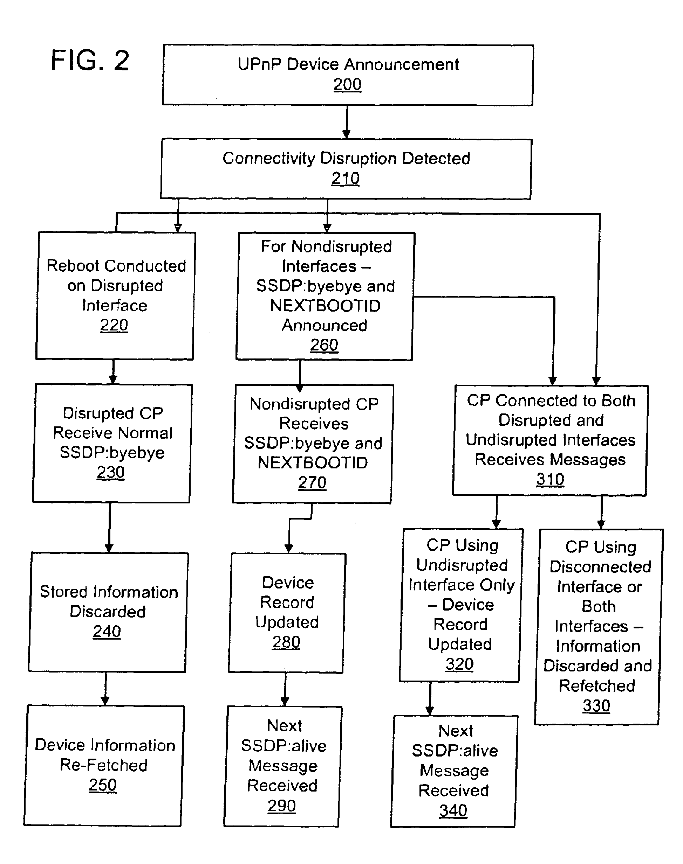

Figure 2 is a flow chart showing an implementation of one general embodiment of the present invention. At 200 in Figure 2, a UPnP device announces itself on all network interfaces with BOOTID=2. At a later time, the UPnP device at 210 detects that a connectivity disruption has occurred on one of its network interfaces. However connectivity on all other network interfaces remains intact. In response to this activity, at 220 the device performs a "reboot" on the network interface on which the disruption occurred by sending a SSDP:byebye message and re-advertising itself with a new BOOTID = 3. Syntax for the SSDP:byebye message is as follows.
NOTIFY * HTTP/1.1
HOST: 239.255.255.250:1900
NT : *notification type*
NTS: ssdp:byebye
USN: *composite identifier for the advertisement*
BOOTID.UPNP.ORG: 2
CONFIGID.UPNP.ORG: *number used for caching description information*
SEARCHPORT.UPNP.ORG *number identifies port on which device responds to unicast M-SEARCH*

At 260, for network interfaces where network connectivity has been intact, the device sends the SSDP:byebye message to announce the next BOOTID that will be used, along with new advertisements with the new BOOTID = 3. Syntax for the SSDP:byebye message is as follows.
NOTIFY * HTTP/1.1
HOST: 239.255.255.250:1900
NT: *notification type*
NTS: ssdp:byebye
USN: *composite identifier for the advertisement*
BOOTID.UPNP.ORG: 2
NEXTBOOTID.UPNP.ORG: 3
CONFIGID.UPNP.ORG: *number used for caching description information*
SEARCIIPORT.UPNP.ORG *number identifies port on which device responds to unicast M-SEARCH*

Situations may arise where a UPnP 1.0 control point is communicatively connected to the UPnP device via a network interface and does not understand the BOOTID header and the NEXTBOOTID header. In this situation, the UPnP 1.0 control point simply treats the arrival of the SSDP:byebye and SSDP:alive messages as typical device "reboots," In this case, the UPnP 1.0 control point typically discards any information that it has stored about the device and re-fetches all of device information, potentially also re-subscribing to its services. The behaviour is the same regardless of whether the UPnP 1.0 control point was connected to the device on the disrupted network interface or the intact network interface. In other words, a UPnP 1.0 control point is promptly alerted that the device has changed.

In terms of the behaviour of control points configured in accordance with version 1.1 of UPnP Device Architecture standard, these control points typically store the BOOTID information of any device that it is connected to. In the above example, the control point records that the device has a BOOTID=2. For a UPnP 1.1 control point that is connected to the network segment over which the device has a connectivity disruption, a normal SSDP:byebye message is received at 230. As represented at 240 in Figure 2, the control point typically discards any information it has stored about the device. When the new SSDP:alive message arrives, the control point typically re-fetches all device information and possibly re-subscribes to its services, represented at 250. This is how the control point is successfully made aware of its new device state.

For a UPnP 1.1 control point that is connected to the network segment over which the device did not have a connectivity disruption, the SSDP:byebye message with the NEXTBOOTID header is received at 270. Noting that the BOOTID value of the SSDP:byebye message is identical to what it has recorded about the device (BOOTID=2), the control point recognizes that the device information it has recorded is still valid. The control point then updates its record of the device at 280 by updating the BOOTID to the value of the NEXTBOOTID header, resulting in BOOTID=3. When the next SSDP:alive message (with BOOTID = 3) arrives at 290, the control point knows that it still has up-to-date information of the device. No re-fetching of device information or re-suhscription to services is necessary.

For a UPnP 1.1 control point that is connected to both the network segment over which the device has experienced connectivity disruption and a network segment over which the device did not have a connectivity disruption, both SSDP:byebye messages with and without the NEXTBOOTID header sent by the device 100 at 220 and 260 are received by control point (over different network interfaces) at 310. In this situation, the behaviour of the control point depends on which interface the control point has been obtaining its device information and event subscriptions from. If the control point has been using solely the network segment over which the device did not have a connectivity disruption, i.e. the network segment from which the SSDP:byebye message with the NEXTBOOTID header was received, then the control point updates its record of the device at 320 by updating the BOOTID to the value of the NEXTBOOTID header, resulting in BOOTID=3. When the next SSDP:alive message (with BOOTID=3) arrives at 340, the control point knows that it still has up-to-date information of the device. No re-fetching of device information or re-subscription to services is necessary. If, on the other hand the control point has relied on the network segment over which the device has experience connectivity disruption, or has been relying on both network segments, then it would discard any information it has stored about the device, and re-fetch all device information, possibly re-subscribing to its services. These actions arc collectively represented at 330 of Figure 2.

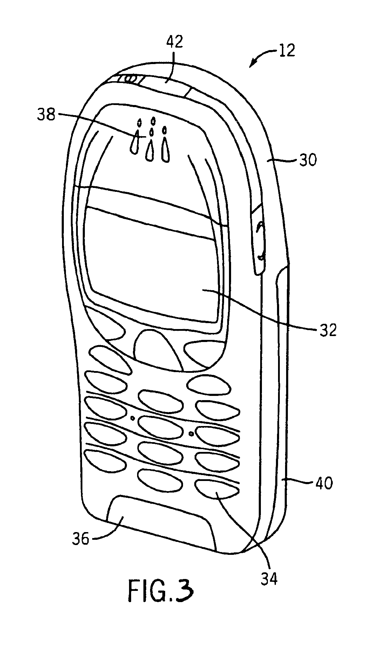

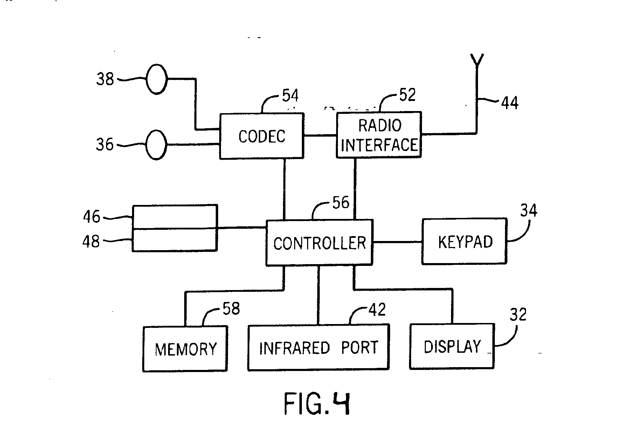

Figures 3 and 4 show one representative electronic device 12 within which the present invention may be implemented. It should be understood, however, that the present invention is not intended to be limited 20 one particular type of device. It should also be understood that some or all of the components shown in Figures 3 and 4 can be incorporated into any of the devices that are involved in implementing the various embodiments of the present invention. The electronic device 12 of Figures 3 and 4 includes a housing 30, a display 32 in the form of a liquid crystal display, a keypad 34, a microphone 36, an ear-piece 38, a battery 40, an infrared port 42, an antenna 44, a smart card 46 in the form of a UICC according to one embodiment of the invention, a card reader 48, radio interface circuitry 52, codec circuitry 54, a controller 56, a memory 58 and a battery 80. Individual circuits and elements are all of a type well known in the art, for example in the Nokia range of mobile telephones.

Communication devices implementing the present invention may communicate with each other and/or other devices using various transmission technologies including, but not limited to, Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc. A communication device may communicate using various media including, but not limited to, radio, infrared, laser, cable connection, and the like.

The various embodiments described herein are described in the general context of method steps or processes, which may be implemented in one embodiment by a computer program product, embodied in a computer-readable medium, including computer-executable instructions, such as program code, executed by computers in networked environments. A computer-readable medim may include removable and non-removable storage devises including, but not limited to, Read Only Memory (ROM), Random Access Memory (RAM), compact discs (CDs), digital versatile disc (DVD), etc. Generally, program modules include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps.

Software and web implementations of various embodiments can be accomplished with standard programming techniques with rule based logic and other logic to accomplish the various database searching steps or processes, correlation steps or processes, comparison steps or processes and decision steps or processes. It should be noted that the words "component" and "module," as used herein and in the following claims, is intended to encompass implementations using one or more lines of software code, and/or hardware implementations, and/or equipment for receiving manual inputs.

The foregoing description of embodiments of the present invention has been presented for purposes of illustration and description. The foregoing description is not intended to be exhaustive or to limit embodiments of the present invention to the precise form disclosed, and modifications and variations are possible in light of the above teachings or may be acquired from practice of the present invention. The embodiments discussed herein were chosen and described in order to explain the principles and the nature of various embodiments and its practical application to enable one skilled in the art to utilize the present invention in various embodiments and with various modifications as are suited to the particular usc contemplated.

## Claims

1. A method, comprising:
receiving an indication of a connectivity disruption on one of a plurality of interfaces (110, 120) of a universal plug and play UPnP device (100);
performing a reboot on a disrupted interface by increasing a BOOTID value of the UPnP device and transmitting a device re-advertisement including the increased BOOTID value on the disrupted interface; and
on each interface of the UPnP device where connectivity was not disrupted, transmitting an indication of the increased BOOTID value.

2. The method of claim 1, wherein the transmitting of the indication of the increased BOOTID value causes control point devices (150, 160, 170) associated with non-disrupted interfaces to update the BOOTID value of the multi-homed device without having to discard stored information concerning the multi-homed device and re-fetch information concerning the device.

3. The method of claim 1 or claim 2, wherein the indication of the increased BOOTID value is transmitted within a NEXTBOOTID header.

4. A computer program product including computer code for causing computer apparatus to perform the method of any of claims 1 to 3.

5. A universal plug and play UPnP device, comprising:
a memory (58) storing computer code; and
a processor (56) configured to execute said computer code in order to:
receive an indication of a connectivity disruption on one of a plurality of interfaces (110, 120) of the UPnP device (100);
perform a reboot on a disrupted interface by increasing a BOOTID value of the UPnP device and transmitting a device re-advertisement including the increased BOOTID value on the disrupted interface; and
on each interface of the UPnP device where connectivity was not disrupted, transmit an indication of the increased BOOTID value.

6. The UPnP device of claim 5, wherein the transmitting of the indication of the increased BOOTID value causes control point devices (150, 160, 170) associated with non-disrupted interfaces to update the BOOTID value of the UPnP device without having to discard stored information concerning the UPnP device and re-fetch information concerning the UPnP device.

7. The UPnP device of claim 5 or claim 6, wherein the indication of the increased BOOTID value is transmitted within a NEXTBOOTID header.

8. The UPnP device of claim 5, wherein the indication of the increased BOOTID value causes universal plug and play UPnP version 1.0 control point devices to discard stored information regarding the UPNP device and re-fetch information concerning the UPnP device.

9. The UPnP device of claim 5, wherein, for a control point device associated with both the disrupted interface and a non-disrupted interface:
if the control point device relies solely on a network segment associated with the non-disrupted interface, the indication of the increased BOOTID value causes the control point device to update the BOOTID value of the UPnP device without having to discard stored information concerning the UPnP device and re-fetch information concerning the UPnP device; and
if the control point device relies at least partially on a network segment associated with the disrupted interface, the reboot causes the control point device to discard stored information concerning the UPnP device and re-fetch information concerning the UPnP device.

10. A system, comprising:
a universal plug and play UPnP device (100) according to any of claims 5 to 9, wherein the plurality of interfaces include a first interface (110) operatively connected to a first network segment and a second interface (120) operatively connected to a second network segment;
a first control point device (150) operatively connected to the first network segment;
a second control point device (160) operatively connected to the second network segment; and
a third control point device (170) operatively connected to both the first network segment and the second network segment.

11. A method, comprising:
receiving at a universal plug and play UPnP control point device (150, 160, 170) over an undisrupted interface an indication of an increased BOOTID value for a UPnP device (100); and
in response to the received indication, at least selectively updating a record of the UPnP device (100) by updating a BOOTID value without discarding stored information concerning the UPnP device and re-fetching information concerning the UPnP device (100).

12. The method of claim 11, wherein the indication of the increased BOOTID value is received within a NEXTBOOTID header in a simple service discovery protocol message.

13. The method of claim 11, wherein if the UPnP control point device relies solely on a network segment associated with the undisrupted interface, the record of the UPnP device (100) is updated by updating the BOOTID value without discarding stored information concerning the UPnP device and re-fetching information concerning the UPnP device.

14. A computer program product comprising computer code for controlling computing apparatus to perform the method of any of claims 11 to 13.

15. A universal plug and play UPnP control point device (150, 160, 170), comprising:
a memory storing computer code; and
a processor configured to execute said computer code in order to:
process an indication of an increased BOOTID value for a UPnP device (100), the indication having been received from the device over an undisrupted interface; and
in response to the received indication, a record of the UPnP device (100) by updating a BOOTID value without discarding stored information concerning the UPnP device and re-fetching information concerning the UPnP device.

16. The apparatus of claim 15, wherein the indication of the increased BOOTID value is received within a NEXTBOOTID header in a simple service discovery protocol message.

## Patentansprüche

1. Verfahren, Folgendes umfassend:
Empfangen einer Meldung über eine Verbindungsstörung auf einer von mehreren Schnittstellen (110, 120) einer Universal Plug and Play, UPnP, Vorrichtung (100);
Ausführen eines Neustarts auf einer gestörten Schnittstelle durch das Erhöhen eines BOOTID-Werts der UPnP-Vorrichtung und das Übertragen einer Vorrichtungs-Neubekanntmachung, die den erhöhten BOOTID-Wert umfasst, auf der gestörten Schnittstelle; und
auf jeder Schnittstelle der UPnP-Vorrichtung, bei der die Verbindung nicht gestört war, Übertragen einer Meldung über den erhöhten BOOTID-Wert.

2. Verfahren nach Anspruch 1, bei dem das Übertragen der Meldung über den erhöhten BOOTID-Wert Control-Point-Vorrichtungen (150, 160, 170), die zu nicht-gestörten Schnittstellen gehören, dazu veranlasst, den BOOTID-Wert der Multihomed-Vorrichtung zu aktualisieren, und dies ohne, dass gespeicherte Information, die die Multihomed-Vorrichtung betrifft, verworfen und Information, die die Vorrichtung betrifft, erneut abgerufen werden muss.

3. Verfahren nach Anspruch 1 oder Anspruch 2, bei dem die Meldung über den erhöhten BOOTID-Wert in einem NEXTBOOTID-Header übertragen wird.

4. Computerprogrammprodukt, das Computercode umfasst, um eine Computervorrichtung zu veranlassen, das Verfahren nach einem der Ansprüche 1 bis 3 auszuführen.

5. Eine Universal Plug and Play, UPnP, Vorrichtung, Folgendes umfassend:
einen Speicher (58), der Computercode speichert; und
einen Prozessor (56), der dafür eingerichtet ist, den Computercode auszuführen, um Folgendes auszuführen:
eine Meldung über eine Verbindungsstörung auf einer von mehreren Schnittstellen (110, 120) der UPnP-Vorrichtung (100) empfangen;
einen Neustart auf einer gestörten Schnittstelle ausführen, und dies durch das Erhöhen eines BOOTID-Werts der UPnP-Vorrichtung und das Übertragen einer Vorrichtungs-Neubekanntmachung, die den erhöhten BOOTID-Wert umfasst, auf der gestörten Schnittstelle; und
auf jeder Schnittstelle der UPnP-Vorrichtung, bei der die Verbindung nicht gestört war, eine Meldung über den erhöhten BOOTID-Wert übertragen.

6. UPnP-Vorrichtung nach Anspruch 5, wobei das Übertragen der Meldung über den erhöhten BOOTID-Wert Control-Point-Vorrichtungen (150, 160, 170), die zu nicht-gestörten Schnittstellen gehören, dazu veranlasst, den BOOTID-Wert der UPnP-Vorrichtung zu aktualisieren, und dies ohne, dass gespeicherte Information, die die UPnP-Vorrichtung betrifft, verworfen und Information, die die UPnP-Vorrichtung betrifft, erneut abgerufen werden muss.

7. UPnP-Vorrichtung nach Anspruch 5 oder Anspruch 6, wobei die Meldung über den erhöhten BOOTID-Wert in einem NEXTBOOTID-Header übertragen wird.

8. UPnP-Vorrichtung nach Anspruch 5, wobei die Meldung über den erhöhten BOOTID-Wert Control-Point-Vorrichtungen mit Universal Plug and Play, UPnP, Version 1.0 dazu veranlasst, gespeicherte Information, die die UPnP-Vorrichtung betrifft, zu verwerfen und Information, die die UPnP-Vorrichtung betrifft, erneut abzurufen.

9. UPnP-Vorrichtung nach Anspruch 5, wobei für eine Control-Point-Vorrichtung, die sowohl der gestörten Schnittstelle als auch einer nicht-gestörten Schnittstelle zugeordnet ist, gilt, dass:
falls die Control-Point-Vorrichtung ausschließlich auf ein Netzsegment angewiesen ist, das der nicht-gestörten Schnittstelle zugeordnet ist, die Meldung über den erhöhten BOOTID-Wert die Control-Point-Vorrichtung dazu veranlasst, den BOOTID-Wert der UPnP-Vorrichtung zu aktualisieren, und dies ohne, dass gespeicherte Information, die die UPnP-Vorrichtung betrifft, verworfen und Information, die die UPnP-Vorrichtung betrifft, erneut abgerufen werden muss; und
falls die Control-Point-Vorrichtung wenigstens teilweise auf ein Netzsegment angewiesen ist, das der gestörten Schnittstelle zugeordnet ist, der Neustart die Control-Point-Vorrichtung dazu veranlasst, gespeicherte Information, die die UPnP-Vorrichtung betrifft, zu verwerfen und Information, die die UPnP-Vorrichtung betrifft, erneut abzurufen.

10. System, Folgendes umfassend:
eine Universal Plug and Play, UPnP, Vorrichtung (100) nach einem der Ansprüche 5 bis 9, wobei die mehreren Schnittstellen eine erste Schnittstelle (110), die mit einem ersten Netzsegment funktionsfähig verbunden ist, und eine zweite Schnittstelle (120), die mit einem zweiten Netzsegment funktionsfähig verbunden ist, umfassen;
eine erste Control-Point-Vorrichtung (150), die mit dem ersten Netzsegment funktionsfähig verbunden ist;
eine zweite Control-Point-Vorrichtung (160), die mit dem zweiten Netzsegment funktionsfähig verbunden ist;
eine dritte Control-Point-Vorrichtung (170), die sowohl mit dem ersten Netzsegment als auch mit dem zweiten Netzsegment funktionsfähig verbunden ist.

11. Verfahren, Folgendes umfassend:
Empfangen an einer Universal Plug and Play, UPnP, Control-Point-Vorrichtung (150, 160, 170) und über eine nicht-gestörte Schnittstelle einer Meldung über einen erhöhten BOOTID-Wert für eine UPnP-Vorrichtung (100); und
in Reaktion auf die empfangene Meldung, ein wenigstens teilweises Aktualisieren eines Eintrags über die UPnP-Vorrichtung (100) durch das Aktualisieren eines BOOTID-Werts, und dies ohne gespeicherte Information zu verwerfen, die die UPnP-Vorrichtung betrifft, und Information, die die UPnP-Vorrichtung (100) betrifft, erneut abzurufen.

12. Verfahren nach Anspruch 11, bei dem die Meldung über den erhöhten BOOTID-Wert in einem NEXTBOOTID-Header in einer Simple-Service-Discovery-Protocol-Nachricht empfangen wird.

13. Verfahren nach Anspruch 11, bei dem die UPnP-Control-Point-Vorrichtung ausschließlich auf ein Netzsegment angewiesen ist, das der nicht-gestörten Schnittstelle zugeordnet ist, wobei der Eintrag über die UPnP-Vorrichtung (100) aktualisiert wird, indem der BOOTID-Wert aktualisiert wird, ohne, dass gespeicherte Information, die die UPnP-Vorrichtung betrifft, verworfen und Information, die die UPnP-Vorrichtung betrifft, erneut abgerufen wird.

14. Computerprogrammprodukt, das Computercode umfasst, um eine Computervorrichtung so zu steuern, dass sie das Verfahren nach einem der Ansprüche 11 bis 13 ausführt.

15. Universal Plug and Play, UPnP, Control-Point-Vorrichtung (150, 160, 170), Folgendes umfassend:
einen Speicher, der Computercode speichert; und
einen Prozessor, der dafür eingerichtet ist, den Computercode auszuführen, um Folgendes auszuführen:
eine Meldung über einen erhöhten BOOTID-Wert für eine UPnP-Vorrichtung (100) verarbeiten, wobei die Meldung von der Vorrichtung über eine nicht-gestörte Schnittstelle empfangen wurde; und
in Reaktion auf die empfangene Meldung, einen Eintrag über die UPnP-Vorrichtung (100) aktualisieren, indem der BOOTID-Wert aktualisiert wird, ohne, dass gespeicherte Information, die die UPnP-Vorrichtung betrifft, verworfen und Information, die die UPnP-Vorrichtung betrifft, erneut abgerufen wird.

16. Vorrichtung nach Anspruch 15, wobei die Meldung über den erhöhten BOOTID-Wert in einem NEXTBOOTID-Header in einer Simple-Service-Discovery-Protocol-Nachricht empfangen wird.

## Revendications

1. Procédé, comprenant les étapes ci-dessous consistant à :
recevoir une indication d'une interruption de connectivité sur une des interfaces parmi une pluralité d'interfaces (110, 120) d'un dispositif de service Plug and Play universel, UPnP, (100) ;
mettre en oeuvre un redémarrage sur une interface interrompue, en augmentant une valeur « BOOTID » du dispositif de service UPnP et en transmettant une nouvelle annonce de dispositif incluant la valeur « BOOTID » augmentée sur l'interface interrompue ; et
sur chaque interface du dispositif de service UPnP où la connectivité n'a pas été interrompue, transmettre une indication de la valeur « BOOTID » augmentée.

2. Procédé selon la revendication 1, dans lequel la transmission de l'indication de la valeur « BOOTID » augmentée amène des dispositifs de point de commande (150, 160, 170) associés à des interfaces non interrompues à mettre à jour la valeur « BOOTID » du dispositif à connexions multiples, sans avoir à écarter des informations stockées concernant le dispositif à connexions multiples ni à rechercher des informations concernant le dispositif.

3. Procédé selon la revendication 1 ou 2, dans lequel l'indication de la valeur « BOOTID » augmentée est transmise dans un en-tête « NEXTBOOTID ».

4. Produit-programme informatique comprenant un code informatique pour amener un dispositif informatique à mettre en oeuvre le procédé selon l'une quelconque des revendications 1 à 3.

5. Dispositif de service Plug and Play universel, UPnP, comprenant :
une mémoire (58) stockant un code informatique ; et
un processeur (56) configuré de manière à exécuter ledit code informatique en vue de :
recevoir une indication d'une interruption de connectivité sur une des interfaces parmi une pluralité d'interfaces (110, 120) du dispositif de service UPnP (100) ;
mettre en oeuvre un redémarrage sur une interface interrompue, en augmentant une valeur « BOOTID » du dispositif de service UPnP et en transmettant une nouvelle annonce de dispositif incluant la valeur « BOOTID » augmentée sur l'interface interrompue ; et
sur chaque interface du dispositif de service UPnP où la connectivité n'a pas été interrompue, transmettre une indication de la valeur « BOOTID » augmentée.

6. Dispositif de service UPnP selon la revendication 5, dans lequel la transmission de l'indication de la valeur « BOOTID » augmentée amène des dispositifs de point de commande (150, 160, 170) associés à des interfaces non interrompues à mettre à jour la valeur « BOOTID » du dispositif de service UPnP, sans avoir à écarter des informations stockées concernant le dispositif de service UPnP ni à rechercher des informations concernant le dispositif de service UPnP.

7. Dispositif de service UPnP selon la revendication 5 ou 6, dans lequel l'indication de la valeur « BOOTID » augmentée est transmise dans un en-tête « NEXTBOOTID ».

8. Dispositif de service UPnP selon la revendication 5, dans lequel l'indication de la valeur « BOOTID » augmentée amène des dispositifs de point de commande de service Plug and Play universel, UPnP, version 1.0 à écarter des informations stockées concernant le dispositif de service UPnP et à rechercher des informations concernant le dispositif de service UPnP.

9. Dispositif de service UPnP selon la revendication 5, dans lequel, pour un dispositif de point de commande associé à l'interface interrompue et à une interface ininterrompue :
si le dispositif de point de commande ne repose que sur un segment de réseau associé à l'interface ininterrompue, l'indication de la valeur « BOOTID » augmentée amène le dispositif de point de commande à mettre à jour la valeur « BOOTID » du dispositif de service UPnP sans avoir à écarter des informations stockées concernant le dispositif de service UPnP ni à rechercher des informations concernant le dispositif de service UPnP ; et
si le dispositif de point de commande repose au moins partiellement sur un segment de réseau associé à l'interface interrompue, le redémarrage amène le dispositif de point de commande à écarter des informations stockées concernant le dispositif de service UPnP et à rechercher des informations concernant le dispositif de service UPnP.

10. Système, comprenant :
un dispositif de service Plug and Play universel, UPnP, (100) selon l'une quelconque des revendications 5 à 9, dans lequel la pluralité d'interfaces comprend une première interface (110) connectée de manière fonctionnelle à un premier segment de réseau et une seconde interface (120) connectée de manière fonctionnelle à un second segment de réseau ;
un premier dispositif de point de commande (150) connecté de manière fonctionnelle au premier segment de réseau ;
un deuxième dispositif de point de commande (160) connecté de manière fonctionnelle au second segment de réseau ; et
un troisième dispositif de point de commande (170) connecté de manière fonctionnelle au premier segment de réseau et au second segment de réseau.

11. Procédé, comprenant les étapes ci-dessous consistant à :
recevoir, au niveau d'un dispositif de point de commande de service Plug and Play universel, UPnP, (150, 160, 170) sur une interface ininterrompue, une indication d'une valeur « BOOTID » augmentée pour un dispositif de service UPnP (100) ; et
en réponse à l'indication reçue, au moins mettre à jour de manière sélective un enregistrement du dispositif de service UPnP (100), en mettant à jour une valeur « BOOTID » sans écarter des informations stockées concernant le dispositif de service UPnP ni rechercher des informations concernant le dispositif de service UPnP (100).

12. Procédé selon la revendication 11, dans lequel l'indication de la valeur « BOOTID » augmentée est reçue dans un en-tête « NEXTBOOTID » dans un message de protocole de découverte de service simple.

13. Procédé selon la revendication 11, dans lequel, si le dispositif de point de commande de service UPnP ne repose que sur un segment de réseau associé à l'interface ininterrompue, l'enregistrement du dispositif de service UPnP (100) est mise à jour en mettant à jour la valeur « BOOTID » sans écarter des informations stockées concernant le dispositif de service UPnP ni rechercher des informations concernant le dispositif de service UPnP.

14. Produit de programme informatique comprenant un code informatique pour amener le dispositif informatique à mettre en oeuvre le procédé selon l'une quelconque des revendications 11 à 13.

15. Dispositif de point de commande de service Plug and Play universel, UPnP, (150, 160, 170), comprenant :
une mémoire stockant un code informatique ; et
un processeur configuré de manière à exécuter ledit code informatique en vue de :
traiter une indication d'une valeur « BOOTID » augmentée pour un dispositif de service UPnP (100), l'indication ayant été reçue en provenance du dispositif sur une interface ininterrompue ; et
en réponse à l'indication reçue, mettre à jour un enregistrement du dispositif de service UPnP (100) en mettant à jour une valeur « BOOTID » sans écarter des informations stockées concernant le dispositif de service UPnP ni rechercher des informations concernant le dispositif de service UPnP.

16. Dispositif selon la revendication 15, dans lequel l'indication de la valeur « BOOTID » augmentée est reçue dans un en-tête « NEXTBOOTID » dans un message de protocole de découverte de service simple.
